# EUROPEAN PATENT APPLICATION

(11) **EP 4 772 472 A1**
(43) Date of publication of application: **08.07.2026**
(21) Application number: 24858588.7
(22) Date of filing: 28.08.2024
(51) Int. Cl.: C01B 39/02

(54) **SINGLE CRYSTAL HOLLOW ZSM-5 MOLECULAR SIEVE, CATALYST COMPRISING MOLECULAR SIEVE, AND PREPARATION METHOD THEREFOR AND USE THEREOF**

(30) Priority: 28.08.2023 CN 202311087394; 27.08.2024 CN 202411180015
(71) Applicant: China Petroleum & Chemical Corporation, Beijing 100728 (CN); Sinopec Research Institute of Petroleum Processing Co., Ltd., Beijing 100083 (CN)
(72) Inventor: HAN, Lei, Beijing 100083 (CN); LIN, Wei, Beijing 100083 (CN); WANG, Peng, Beijing 100083 (CN); SONG, Haitao, Beijing 100083 (CN); ZHOU, Xiang, Beijing 100083 (CN); WANG, Ruoyu, Beijing 100083 (CN); SHA, Yuchen, Beijing 100083 (CN); ZHAO, Liuzhou, Beijing 100083 (CN)
(74) Representative: Hoffmann Eitle
(86) International application number: PCT/CN2024/114972
(87) International publication number: WO 2025/045054

(57) **Abstract**

The present invention relates to a single-crystal hollow ZSM-5 zeolite. Particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite, and wherein a ratio of a length of crystal grain of the zeolite to a length of the outer-layered cavity is 1.1-2.0, and a ratio of a width of crystal grain of the zeolite to a width of the outer-layered cavity is 1.05-1.5. The present invention also relates to a preparation method and use of the single-crystal hollow ZSM-5 zeolite.

## Description

### TECHNICAL FIELD

The present invention belongs to the technical field of catalytic materials, and relates to a single-crystal hollow ZSM-5 zeolite, its preparation method and use, and also relates to a catalyst for deep catalytic cracking comprising said single-crystal hollow ZSM-5 zeolite and its preparation method and use.

### BACKGROUND ART

Petroleum is an important source of vehicle fuel and organic raw materials. Petroleum is a mixture of hydrocarbons, which is often fractionated during processing. A large portion of it is heavy oil, but heavy oil is difficult to use directly and requires further processing and conversion. Refineries often convert heavy oil into different products and adjust the proportions of different products through deep catalytic cracking according to market demands; for example, some refineries primarily aim to produce vehicle fuels such as gasoline and diesel, others mainly aim to produce gasoline and low-carbon olefins, and still others focus on producing chemical feedstock, aiming for as little gasoline and diesel product as possible. A key factor in deep catalytic cracking of heavy oil into different target products is the catalyst for deep catalytic cracking.

Catalysts for deep catalytic cracking are the technological core in the petrochemical field and the source of technological progress in petrochemicals. Deep catalytic cracking for low-carbon olefins is a typical high-temperature acid-catalyzed reaction, and its important core is the development and design of catalysts for deep catalytic cracking. Deep catalytic cracking often adjusts target products according to market demand. ZSM-5 zeolite, with its unique pore structure, tunable acidity, and high thermal/hydrothermal stability, is the preferred choice for catalysts for deep catalytic cracking of hydrocarbon. However, its regular and ordered microporous structure, while enhancing the selectivity for specific products, also restricts the diffusion of macromolecular hydrocarbon reactants and products, and can promote coke formation, further covering active sites and causing catalyst deactivation. The prior art has proposed hollow ZSM-5 zeolites, but these hollow ZSM-5 zeolites have a single morphology and mostly use large amounts of organic templates for synthesis.

Low-carbon olefins (ethylene, propylene, etc.) are important basic raw materials for the petrochemical industry. With the rapid development of the global economy, the petrochemical industry is in a period of rapid growth, and the demand for low-carbon olefins has increased sharply. In particular, ethylene is an important basic raw material supporting national economic and social development, known as the "mother of petrochemicals". The scale, yield, and technological level of its industrial production have become an important indicator of a country's chemical industry level. Deep catalytic cracking of hydrocarbons is an important means of obtaining small-molecule hydrocarbons such as ethylene and propylene from large-molecule hydrocarbons. During the deep cracking process, hydrocarbons undergo a large number of parallel and consecutive reactions. In addition to cracking to form small-molecule hydrocarbons, they may also undergo aromatization to form aromatic hydrocarbons; the formed aromatic hydrocarbons with side chains may continue to crack or undergo dealkylation to form BTX light aromatic hydrocarbons, or may form heavy aromatic hydrocarbons through hydrogen transfer.

Ethylene production mainly relies on technical routes such as naphtha cracking, coal/methanol to olefins, catalytic cracking/deep catalytic cracking of heavy oil, and cracking of light hydrocarbon. Deep catalytic cracking, using heavy oil, naphtha, and light olefins as main feedstock, can produce ethylene at relatively lower reaction temperatures under the action of a catalyst, offering advantages such as flexible and adjustable product distribution, lower energy consumption levels, and relatively more environmental friendliness. Deep catalytic cracking of heavy oil is based on catalytic cracking, using catalysts capable of producing more low-carbon olefins and appropriately adjusting reaction conditions, such as increasing reaction temperature, to convert heavy oil under more severe conditions. The catalyst for deep catalytic cracking is a key factor affecting deep catalytic cracking of heavy oil. Co-producing BTX during the deep catalytic cracking reaction process can provide room for subsequent product adjustment. Aromatic hydrocarbons generated from hydrocarbon cracking are by-products of low-carbon olefin production; however, the prior art does not disclose how to achieve higher BTX yield simultaneously with higher ethylene yield.

CN103157507A discloses a catalyst for deep catalytic cracking containing 2-50 wt% of ultrastablized rare earth Y-type zeolite, 0.5-30 wt% of one or more other zeolites, 0.5-70 wt% of clay, 1.0-65 wt% of high-temperature resistant inorganic oxide, and 0.01-12.5 wt% of rare earth oxide. It has features of strong heavy oil conversion ability and high light oil yield. This catalyst is mainly used to increase gasoline yield, with limited contribution to increasing low-carbon olefin yield.

CN112138712A discloses a catalyst for deep catalytic cracking and its preparation method, and a deep catalytic cracking process of hydrocarbon oil. The catalyst contains, on a dry weight basis, 1-30 wt% ofY-type zeolite, 5-55 wt% of phosphorus- and metal-containing MFI structure zeolite rich in mesopore, 1-60 wt% of inorganic binder, and optionally 0-60 wt% of a second clay. The inorganic binder includes phosphorus-aluminum inorganic binder and/or other inorganic binders. The catalyst exhibits better ethylene selectivity in deep catalytic cracking reactions of petroleum hydrocarbon while co-producing more propylene and BTX.

In recent years, the degree of feedstock heaviness and inferiority has deepened. The prior art does not involve catalysts that further improve heavy oil conversion while balancing gasoline and low-carbon olefin yields under different operating conditions.

### SUMMARY OF THE INVENTION

The object of the present invention is to provide a novel zeolite and catalyst usable in the petrochemical and/or fine chemical fields, and their preparation methods and uses. This zeolite can be used to prepare catalysts for use in the petrochemical and/or fine chemical fields, particularly for catalysts for deep catalytic cracking in deep catalytic cracking reactions of heavy oil to increase gasoline and low-carbon olefin production.

The inventors of the present invention have found through research that by adjusting the pore structure and acid site distribution of the zeolite, the generation of aromatic hydrocarbons can be partially suppressed or the generation of aromatic hydrocarbons can be promoted. This adjustability provides the possibility to adjust the distribution of deep catalytic cracking products, enabling the production of low-carbon olefins through deep catalytic cracking and providing a reasonable product distribution for subsequent utilization of the products. However, to date, those skilled in the art do not know how to perform such adjustment.

According to a first aspect of the present invention, it provides a single-crystal hollow ZSM-5 zeolite. The particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite. Furthermore, the ratio of the length of the zeolite crystal grain (denoted as Dₜ) to the length of the outer-layered cavity (denoted as Dⱼ) is 1.1-2.0, and the ratio of the width of the zeolite crystal grain to the width of the outer-layered cavity is 1.05-1.5, wherein, the length and width of the zeolite crystal grain are obtained by randomly measuring the sizes of the maximum dimension and the dimension perpendicular to that maximum dimension in the projection plane of 10 crystal grains in SEM or TEM images of a zeolite sample, respectively, and then calculating their average values; the length and width of the outer-layered cavity are obtained by randomly measuring the sizes of the maximum dimension and the dimension perpendicular to that maximum dimension of the bright white portion in the projection plane of 10 crystal grains in SEM or TEM images of a zeolite sample, respectively, and then calculating their average values.

According to a second aspect of the present invention, it provides a method for preparing a single-crystal hollow ZSM-5 zeolite, wherein the particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite, and wherein the ratio of the length Dₜ of the zeolite crystal grain to the length Dⱼ of the outer-layered cavity is 1.1-2.0, and the ratio of the width of the zeolite crystal grain to the width of the outer-layered cavity is 1.05-1.5, characterized in that the method comprises:
step A, preparing a crystal seed solution, which includes the following sub-steps:
   (A1) mixing a first silicon source, a template agent, and water to obtain a first mixture;
   (A2) subjecting the first mixture obtained in sub-step (A1) to hydrothermal dynamic crystallization to obtain a crystal seed solution;
step B, preparing the single-crystal hollow ZSM-5 zeolite, which includes the following sub-steps:
   (B1) under stirring, sequentially adding an alkali source solution, a second silicon source dispersion, and an aluminum source dispersion into water to obtain a second mixture;
   (B2) under stirring, adding a certain amount of the aforementioned crystal seed solution into the second mixture to obtain a third mixture;
   (B3) subjecting the third mixture to hydrothermal dynamic crystallization; filtering the obtained product, optionally washing, drying, and calcining it to obtain a parent zeolite;
   (B4) mixing the obtained parent zeolite with an alkali-containing solution to perform treatment, to obtain a solid product; and optionally
   (B5) treating the obtained solid product to obtain an H-type single-crystal hollow ZSM-5 zeolite; and optionally
   (B6) introducing phosphorus into the H-type single-crystal hollow ZSM-5 zeolite obtained in sub-step (B5).

More specifically, the method for preparing the single-crystal hollow ZSM-5 zeolite comprises:
A. preparing seed zeolite, including the following sub-steps:
   (A1) under stirring, dissolving a first silicon source and a template agent in water, stirring at 30-60°C for more than 1 hour, preferably 2-6 hours, to obtain a first mixture; preferably, the molar ratio of template agent R/SiO₂ is 0.05-0.50, and the molar ratio of H₂O/SiO₂ is 10-80;
   (A2) subjecting the first mixture from sub-step (A1) to hydrothermal dynamic crystallization at a temperature of 140-180°C for more than 1 hour, e.g., 8-24 hours, preferably 10-18 hours; for example, transferring the mixture to a high-pressure hydrothermal reaction kettle with a polytetrafluoroethylene inner liner and performing hydrothermal crystallization under stirring to obtain a solution containing the crystallization product, denoted as the crystal seed solution; preferably, the crystal grain size of the crystal seeds in said crystal seed solution is 200-800 nm;
B. preparing the single-crystal hollow ZSM-5 zeolite, including the following sub-steps:
   (B1-1) dissolving an alkali source in water and stirring evenly to obtain an alkali source solution.
   (B1-2) dissolving an aluminum source in water and stirring evenly to obtain an aluminum source solution.
   (B1-3) under stirring, mixing a second silicon source with the alkali source solution obtained in sub-step (B1-1), preferably stirring it at room temperature for more than 5 minutes, more preferably for more than 10 minutes;
   (B1-4) optionally mixing the product obtained in sub-step (B1-3) with water to perform dilution, then mixing it with the aluminum source solution obtained in sub-step (B1-2) under stirring, preferably stirring it at room temperature for more than 1 minute, more preferably for 30-60 minutes, to obtain a mixture, referred to as the second mixture; wherein said mixture has the following molar formulation ratios: n(SiO₂)/n(Al₂O₃)=20-200, n(MB₂O)/n(SiO₂)=0.10-0.20, n(H₂O)/n(SiO₂)=20-60, wherein MB represents an alkali metal; preferably, MB represents one or more of K, Rb, Cs;
   (B2) under stirring, adding a certain amount of the crystal seed solution obtained in sub-step A(2) to the second mixture obtained in sub-step (B1-4), preferably stirring it at room temperature for more than 10 minutes, e.g., stirring for 1-6 hours, to obtain a mixture, referred to as the third mixture.
   (B3) subjecting the third mixture from sub-step (B2) to hydrothermal dynamic crystallization at a temperature above 100°C, e.g., for more than 1 hour, preferably hydrothermal dynamic crystallization at a temperature of 140-180°C, more preferably 150-170°C, for 6-48 hours, preferably 10-40 hours; filtering the obtained product, optionally washing, drying, and calcining it to obtain the parent zeolite;
   (B4) under stirring, mixing the parent zeolite obtained in sub-step (B3) with an alkali-containing solution, e.g., stirring it at a temperature of 60-90°C for, e.g., 20-60 minutes; preferably, the alkali content in said alkali-containing solution is 0.4-1.0 mol/L, to obtain a solid product; and optionally
   (B5) subjecting the solid product obtained in sub-step (B4) to exchange treatment to obtain the H-type single-crystal hollow ZSM-5 zeolite; and optionally
   (B6) introducing phosphorus into the H-type single-crystal hollow ZSM-5 zeolite obtained in sub-step (B5).

In the description of the present invention, said room temperature is 20-35°C. For explanation, in this description, the crystal grain size of the crystal seeds is obtained by randomly selecting 10 crystal seeds, measuring the size of their maximum dimension, and then taking the average.

According to a third aspect, the present invention also relates to a use of a single-crystal hollow ZSM-5 zeolite according to the first aspect of the present invention or obtained by the method according to the second aspect of the present invention in the petrochemical and/or fine chemical fields.

According to a fourth aspect, the present invention also relates to a catalyst, particularly a catalyst for deep catalytic cracking, containing the single-crystal hollow ZSM-5 zeolite according to the first aspect of the present invention or obtained by the method according to the second aspect of the present invention.

According to a fifth aspect, the present invention also relates to a method for preparing the catalyst according to the aforementioned fourth aspect.

According to a sixth aspect, the present invention also relates to a use of the catalyst for deep catalytic cracking according to the aforementioned fourth aspect in the deep catalytic cracking of heavy oil to produce low-carbon olefins (ethylene, propylene, etc.) and gasoline.

According to a seventh aspect, the present invention provides a deep catalytic cracking process, which comprises contacting hydrocarbon oil with the single-crystal hollow ZSM-5 zeolite according to the aforementioned first aspect of the present invention or the catalyst according to the aforementioned fourth aspect of the present invention to perform reaction.

The particles of the single-crystal hollow ZSM-5 zeolite according to the present invention or obtained by the method according to the present invention have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite; and, the ratio of the length Dₜ of the zeolite crystal grain to the length Dⱼ of the outer-layered cavity is 1.1-2.0, and the ratio of the width of the zeolite crystal grain to the width of the outer-layered cavity is 1.05-1.5.

The preparation method for the single-crystal hollow ZSM-5 zeolite provided by the present invention is simple, does not require the use of large amounts of organic template agents, has good technical economy, and can produce the said single-crystal hollow ZSM-5 zeolite provided by the present invention.

### BRIEF DESCRIPTION OF THE FIGURES

The figures are used for illustrating the present invention and constitute part of the description. They, together with the following specific embodiments, are used to explain the present invention but do not constitute limitations on the present invention, wherein:
Figure 1 shows a transmission electron microscopy image of the H-type single-crystal hollow ZSM-5 zeolite obtained in Example 1.
Figure 2 shows a Fourier transform diffraction pattern of the H-type single-crystal hollow ZSM-5 zeolite prepared in Example 1.
Figure 3 shows a simple schematic diagram of the single-crystal hollow ZSM-5 zeolite crystal of the present invention.

### DETAILED DESCRIPTION OF THE INVENTION

The following specific embodiments describe the preferred technical solutions of the present invention in detail. It should be understood that the specific embodiments described herein are only for illustrating preferred implementation schemes of the present invention and are not intended to limit the scope of the present invention.

Any specific numerical values disclosed in the description of the present invention (including endpoints of numerical ranges) are not limited to the precise value but should be understood to also encompass values close to that precise value, for example, all possible numerical values within the range of precise value ±5%. Furthermore, for the disclosed numerical ranges, one or more new numerical ranges can be formed by arbitrary combination between the endpoint values of the range, between endpoint values and specific point values within the range, and between various specific point values. These new numerical ranges should also be considered as specifically disclosed herein.

Unless otherwise stated, the terms used in the description of the present invention have the same meanings as commonly understood by those skilled in the art. If a term is defined herein and its definition differs from the common understanding in the art, the definition herein shall prevail.

In the description of the present invention, except for explicitly stated content, any matters or items not mentioned are directly applicable to those known in the art without any change. Moreover, any embodiment described herein can be freely combined with one or more other embodiments described herein, and the technical solutions or technical ideas thus formed are considered as part of the original disclosure or original record of the present invention and should not be regarded as new content not disclosed or anticipated herein, unless such combination is considered obviously unreasonable by those skilled in the art.

All patent and non-patent documents cited in the description of the present invention, including but not limited to textbooks and journal articles, etc., are incorporated into the description in their entirety by reference.

In the description of the present invention, the term "comprise" is synonymous with "include" and "contain", and is inclusive or open-ended, without excluding other unstated elements. It should be understood that the term "comprise" includes the exclusive and closed term "consist of...". The term "based on" is synonymous with "comprise at least 80% by weight of". Unless explicitly stated, percentages given are wt%. Furthermore, in this description, the terms "substantially" or "essentially" correspond to approximations of ±5%, preferably ±1%, very preferably ±0.5%, for example ±0.1%. For instance, an effluent substantially comprising compound A or essentially consisting of compound A corresponds to an effluent comprising at least 95 wt% of compound A.

The measurements of various parameters disclosed in the description of the present invention, if not explicitly specified, are carried out by the most conventional methods in the art.

As mentioned above, according to the first aspect of the present invention, it provides a single-crystal hollow ZSM-5 zeolite. The particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite; furthermore, the ratio of the length (denoted as Dₜ) of the zeolite crystal grain to the length (denoted as Dⱼ) of the outer-layered cavity is 1.1-2.0, and the ratio of the width of the zeolite crystal grain to the width of the outer-layered cavity is 1.05-1.5. Additionally, the zeolite crystal grain

In this description, the expression "length of the zeolite crystal grain" is equivalent to the expression "average crystal grain size of the zeolite", referring to the size of the maximum dimension of the crystal grain, which can be obtained by measuring the size of the maximum dimension in the projection plane of crystal grains in SEM or TEM images of a zeolite sample; to avoid haphazard, generally 10 zeolite crystal grains are randomly selected, their lengths measured, and then the average is taken. For explanation, the length and width of crystal grain, the length and width of cavity, and the wall layer thickness of zeolite of the zeolite samples of the present invention are obtained by randomly selecting 10 zeolite crystal grains in SEM or TEM images of a zeolite sample, measuring their length of crystal grain, width of crystal grain, length of cavity, width of cavity, and wall layer thickness of zeolite, and then calculating their arithmetic averages.

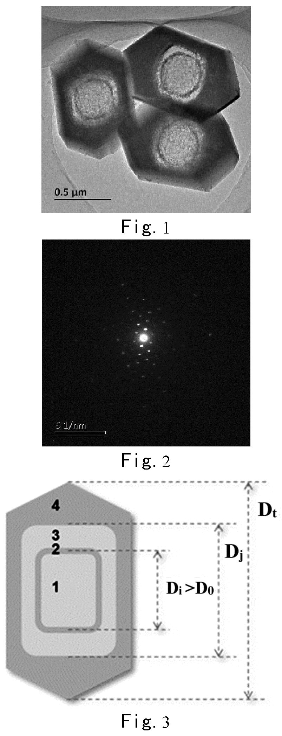

As shown in Figure 3, the zeolite crystal grain includes an inner-layered cavity 1, a first wall layer of zeolite 2, an outer-layered cavity 3, and a second wall layer of zeolite 4, wherein the length of the zeolite crystal grain is denoted as Dₜ; the length Dₜ of the crystal grain usually refers to the length along the ac-axis direction; the length of the outer-layered cavity is denoted as Dⱼ, referring to the size of the maximum dimension of the cavity. Usually, the maximum dimension of the cavity has the same direction as the maximum dimension of the crystal grain. It can be obtained by randomly measuring the size of the maximum dimension of the bright white portion in the projection plane of 10 crystal grains in SEM or TEM images of a zeolite sample and then calculating their average. The length of the inner-layered cavity is denoted as Dᵢ, referring to the size of the maximum dimension in the projection of the inner-layered cavity structure in SEM or TEM images of a zeolite sample, also obtained by calculating the average; the width of the inner-layered cavity is denoted as Dₒ, referring to the size of the dimension perpendicular to the length direction of the inner-layered cavity, wherein Dᵢ > Dₒ. The "width of the zeolite crystal grain" refers to the size of the dimension perpendicular to the length direction of the zeolite crystal grain. The width of the outer-layered cavity refers to the size of the dimension perpendicular to the length direction of the outer-layered cavity, is also obtained by the measurement in SEM or TEM images of a zeolite sample. The thickness of the first wall layer of zeolite (i.e., the distance between the outer wall surface of the inner-layered cavity and the inner wall surface of the outer-layered cavity) is obtained by randomly measuring the distance between the outer wall surface of the inner-layered cavity and the inner wall surface of the outer-layered cavity and calculating the average; the thickness of the second wall layer of zeolite is obtained by randomly measuring the distance between the inner wall surface of the outer-layered cavity and the outer wall surface of the zeolite crystal and calculating the average.

The inventors surprisingly found through research that, the zeolite according to the present invention has its specific hexagonal crystal shape and size, double-layered cavity structure, pore structure, and acid site distribution, sot that the zeolite exhibits improved selectivity in deep catalytic cracking, it can not only produce low-carbon olefins through deep catalytic cracking but also obtain a relatively high yield of gasoline components in the cracking products, providing a reasonable product distribution for subsequent utilization of the products.

According to a preferred embodiment, for the single-crystal hollow ZSM-5 zeolite according to the present invention, the ratio of the length Dₜ of the crystal grain to the length Dⱼ of the outer-layered cavity is 1.1-2.0, preferably 1.3-1.8, e.g., 1.4, 1.5, 1.6, or 1.7; the ratio of the width of the zeolite crystal grain to the width of the outer-layered cavity is 1.05-1.5, preferably 1.1-1.4, e.g., 1.2 or 1.3. The above ratios render the second wall layer of zeolite have a smaller thickness, which simultaneously provides the zeolite with sufficient mechanical strength and shorter diffusion paths, thereby improving the accessibility of active centers and catalytic selectivity, and providing sufficient mass transfer speed, allowing hydrocarbon molecules to quickly access active centers.

For the single-crystal hollow ZSM-5 zeolite according to the present invention, as shown in the attached Figure 1, the expression "double-layer" is intended to indicate that the single-crystal hollow ZSM-5 zeolite crystal includes two alternately enclosing zeolite wall layers and two cavity layers, i.e., the first wall layer of zeolite at least partially encloses the inner-layered cavity, and outside the first wall layer of zeolite is the outer-layered cavity layer; the second wall layer of zeolite completely encloses the outer-layered cavity. The expression "single-crystal" is intended to indicate that the particles of ZSM-5 zeolite have a single-crystal structure. The expression "hollow" in this description can be used interchangeably with the expression "cavity" and is intended to indicate that there is a space within the ZSM-5 zeolite crystal grain that does not contain ZSM-5 zeolite, which space is at least partially enclosed by a Wall layer of ZSM-5 zeolite with a certain thickness.

According to an embodiment of the first aspect of the present invention, the particles of single-crystal hollow ZSM-5 zeolite have a single-crystal structure, with an average crystal grain size of 1.0-3.0 µm, e.g., 1.5-2.9 µm.

According to an embodiment of the first aspect of the present invention, the individual crystal grains of the single-crystal hollow ZSM-5 zeolite grow along the ac-axis direction (along the 010 plane), and the growth orientation of the entire particle is consistent, i.e., growing along the ac-axis direction. The entire particle of the single-crystal hollow ZSM-5 zeolite has a single-crystal structure. The crystal structure and growth orientation of said single-crystal hollow ZSM-5 zeolite can be observed by high-resolution spherical aberration electron microscopy.

According to an embodiment of the first aspect of the present invention, said single-crystal hollow ZSM-5 zeolite has a regular hexagonal morphology.

According to an embodiment of the first aspect of the present invention, the length of the crystal grains of said single-crystal hollow ZSM-5 zeolite is 1.0-3.0 µm, e.g., 1.2-2.9 µm; the width of the crystal grains is 0.5-2.5 µm, preferably 0.5-2.0 µm, e.g., 0.8-1.8 µm; the length of the inner-layered cavity is 100-800 nm, e.g., 200-700 nm; the length of the inner-layered cavity is greater than its width, their ratio being 1.01-1.2; the thickness of the first wall layer of zeolite is less than 400 nm, e.g., 100-250 nm. The thickness of the second wall layer of zeolite (i.e., the distance between the outer wall surface of the outer-layered cavity and the outer wall surface of the zeolite crystal) is usually less than 700 nm, e.g., 100-500 nm, preferably 150-400 nm.

Due to its special single-crystal structure and pore distribution, the single-crystal hollow ZSM-5 zeolite according to the present invention has excellent hydrothermal stability, high crystallinity retention, and excellent catalytic performance.

The relative crystallinity of the zeolite according to the present invention is calculated using the XRD standard ZSM-5 zeolite reference sample from Sinopec Research Institute of Petroleum Processing Co., Ltd. as the benchmark, considering the crystallinity of the reference sample as 100%.

According to an embodiment of the first aspect of the present invention, said single-crystal hollow ZSM-5 zeolite contains phosphorus or does not contain phosphorus. Preferably, the phosphorus/aluminum molar ratio in said single-crystal hollow ZSM-5 zeolite is 0.5-1.5. Under conditions of hydrothermal treatment at 800°C for 17 hours, the crystallinity retention is greater than or equal to 90%, e.g., 91-92%, and the acid amount retention is greater than or equal to 30%. Alternatively, after said single-crystal hollow ZSM-5 zeolite is modified under a phosphorus/aluminum molar ratio of 1, under conditions of hydrothermal treatment at 800°C for 17 hours, the crystallinity retention is greater than or equal to 90%, e.g., 91-92%, and the acid amount retention is greater than or equal to 30%, e.g., 30-40% or 30.5-35%. This indicates that the zeolite has relatively good hydrothermal stability after phosphorus modification. Crystallinity retention refers to the ratio of the relative crystallinity of the product obtained after said zeolite is modified under a phosphorus/aluminum molar ratio of 1 and then subjected to hydrothermal treatment at 800°C for 17 hours (referred to as the relative crystallinity after hydrothermal treatment) to the relative crystallinity of the product obtained after said zeolite is modified under a phosphorus/aluminum molar ratio of 1 (referred to as the relative crystallinity before hydrothermal treatment). Acid amount retention refers to the ratio of the acid amount of the product obtained after said zeolite is modified under a phosphorus/aluminum molar ratio of 1 and then subjected to hydrothermal treatment at 800°C for 17 hours (referred to as the acid amount after hydrothermal treatment) to the acid amount of the product obtained after said zeolite is modified under a phosphorus/aluminum molar ratio of 1 (referred to as the acid amount before hydrothermal treatment). Said hydrothermal treatment is conducted under an atmosphere of 100 vol% water vapor.

The acid amount of the zeolite according to the present invention is obtained using the NH3-TPD method. The determination of the acid amount of zeolite uses the Autochem II 2920 temperature-programmed desorption instrument from Micromeritics, USA. Specific test method is: weighing 0.2 g of 20-40 mesh zeolite into a sample tube, placing it in the heating furnace, using He at a flow rate of 25 mL/min as carrier gas, heating up at 20 °C/min to 600 °C, purging it for 90 minutes to remove impurities adsorbed on the zeolite surface; then cooling down to 150 °C, maintaining the temperature for 5 minutes, then introducing NH₃-He gas (mass fraction 10% NH₃ and 90% He) by the system to perform adsorption for 60 minutes, then purging it with He for 120 minutes until the baseline is stable to desorb the physically adsorbed ammonia; programmed-heating up to 600 °C at a heating rate of 10 °C/min to perform desorption, maintaining the temperature for 60 minutes, desorption ends; using TCD to detect the change of gas component, and the instrument automatically integrates to obtain the total acid amount.

The modification of said single-crystal hollow ZSM-5 zeolite under a phosphorus/aluminum molar ratio of about 1 can be implemented using an equal-volume impregnation method, and the method is as follows: the zeolite sample is evenly spread on a watch glass or crucible, a phosphorus-containing solution is slowly poured onto the zeolite sample so that the zeolite sample ultimately appears "paste-like", stirred evenly and then dried in an oven; then ground evenly, and calcined at 550 °C for 4 hours. Usually, the mass ratio of the phosphorus-containing solution to the zeolite sample is 1-3. Said phosphorus-containing solution is, for example, phosphoric acid solution or ammonium dihydrogen phosphate solution or diammonium hydrogen phosphate solution. In the present invention, the phosphorus/aluminum molar ratio of the single-crystal hollow ZSM-5 zeolite can be detected by XRF fluorescence method.

According to an embodiment of the first aspect of the present invention, the mesoporous specific surface area of said single-crystal hollow ZSM-5 zeolite accounts for 5-15% of the total specific surface area, e.g., 8-14%.

According to an embodiment of the first aspect of the present invention, the mesopore volume of said single-crystal hollow ZSM-5 zeolite accounts for 30-50% of the total pore volume, e.g., 32-41%.

The total specific surface area, mesoporous specific surface area, microporous specific surface area, and pore volume of the single-crystal hollow ZSM-5 zeolite of the present invention are measured using the low-temperature nitrogen adsorption method. The instrument used in the low-temperature nitrogen adsorption analysis is the ASAP2420 physical adsorption instrument (from Micromeritics, USA), according to the following experimental method: First step is sample pretreatment: weighing a certain amount of sample and charging it into a sample tube that has been measured for blank, placing it in the degassing treatment unit, and degassing it for 6 hours under conditions of furnace temperature of 300°C and vacuum degree less than 1.33 Pa; second step is sample measurement: placing the pretreated sample together with tube into the measurement unit, filling the Dewar flask with liquid nitrogen, inputting the analysis file to start the measurement; the measurement process involves using the static volumetric method to determine the adsorption isotherm. The total pore volume is calculated based on the adsorption amount at P/Po = 0.98; the pore size distribution is calculated using the BJH method to obtain the mesopore volume; the specific surface area is calculated using the BET formula. Test conditions include: samples are vacuum degassed at 100 °C and 300 °C for 0.5 hours and 6 hours respectively, and N₂ adsorption-desorption testing is performed at 77.4 K temperature. The adsorption amount and desorption amount of nitrogen by the purified sample under different relative pressure conditions are tested to obtain the N₂ adsorption-desorption isotherm curve. The BET specific surface area is calculated using the BET formula, the micropore area is calculated using the t-plot method, and the pore size distribution is calculated using the BJH method.

The single-crystal hollow ZSM-5 zeolite provided by the present invention has inner and outer double-layered cavity structure respectively at least partially enclosed by two zeolite layers. The pore-channels of zeolite are mainly of microporous structure, while also rich in mesopore and macropores between the zeolite layers, which can further provide multi-directional diffusion paths, expand confined spaces, improve the accessibility of active centers, and exhibit improved catalytic capability for converting large-molecule hydrocarbons such as deep cracking. Because the single-crystal hollow ZSM-5 zeolite of the present invention has a relatively regular hexagonal morphology, its crystal grain surface is regular, smooth, and free of attachments, with an average crystal grain size of 1.0-3.0 µm. This makes all particles of the single-crystal hollow ZSM-5 zeolite have very similar structural parameters to each other, including but not limited to pore size, pore length. The inventors surprisingly found that zeolites with such a structure are particularly suitable for the deep catalytic cracking of large molecules to produce gasoline and low-carbon olefins.

The single-crystal hollow ZSM-5 zeolite according to the present invention can be an H-type single-crystal hollow ZSM-5 zeolite or a phosphorus-containing single-crystal hollow ZSM-5 zeolite. The phosphorus content of said phosphorus-containing single-crystal hollow ZSM-5 zeolite, calculated as P₂O₅, can be greater than 0 to 15 wt%, e.g., 0.5-10 wt%.

According to a second aspect of the present invention, it provides a method for preparing a single-crystal hollow ZSM-5 zeolite, wherein the particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite, and wherein the ratio of the length Dₜ of the zeolite crystal grain to the length Dⱼ of the outer-layered cavity is 1.1-2.0, and the ratio of the width of the zeolite crystal grain to the width of the outer-layered cavity is 1.05-1.5, characterized in that the method comprises:
step A for preparing a crystal seed solution, which includes the following sub-steps:
   (A1) mixing a first silicon source, a template agent, and water to obtain a first mixture;
   (A2) subjecting the first mixture obtained in sub-step (A1) to hydrothermal dynamic crystallization to obtain a crystal seed solution;
Step B for preparing the single-crystal hollow ZSM-5 zeolite, which includes the following sub-steps:
   (B1) under stirring, sequentially adding an alkali source solution, a second silicon source dispersion, and an aluminum source dispersion into water to obtain a second mixture;
   (B2) under stirring, adding a certain amount of the aforementioned crystal seed solution into the second mixture to obtain a third mixture;
   (B3) subjecting the third mixture to hydrothermal dynamic crystallization; filtering the obtained product, optionally washing, drying, and calcining it to obtain a parent zeolite;
   (B4) mixing the obtained parent zeolite with an alkali-containing solution to perform treatment to obtain a solid product; and optionally
   (B5) treating the obtained solid product to obtain an H-type single-crystal hollow ZSM-5 zeolite; and optionally
   (B6) introducing phosphorus into the H-type single-crystal hollow ZSM-5 zeolite obtained in sub-step (B5).

According to an embodiment of the above preparation method, the method comprises:
A. preparing seed zeolite, including the following sub-steps:
   (A1) under stirring, dissolving a first silicon source and a template agent in water, stirring at 30-60°C for more than 1 hour, preferably 2-6 hours, to obtain a first mixture, preferably, the molar ratio of template agent R/SiO₂ is 0.05-0.50, and the molar ratio of H₂O/SiO₂ is 10-80;
   (A2) subjecting the first mixture from sub-step (A1) to hydrothermal dynamic crystallization at a temperature of 140-180°C for more than 1 hour, e.g., 8-24 hours, preferably 10-18 hours; for example, transferring the mixture to a high-pressure hydrothermal reaction kettle with a polytetrafluoroethylene inner liner and performing hydrothermal crystallization under stirring to obtain a solution containing the crystallization product, denoted as crystal seed solution; preferably, the crystal grain size of the crystal seeds in said crystal seed solution is 200-800 nm;
B. preparing the single-crystal hollow ZSM-5 zeolite, including the following sub-steps:
   (B1-1) dissolving an alkali source in water and stirring evenly to obtain an alkali source solution.
   (B1-2) dissolving an aluminum source in water and stirring evenly to obtain an aluminum source solution.
   (B1-3) under stirring, mixing a second silicon source with the alkali source solution obtained in sub-step (B1-1), preferably stirring it at room temperature for more than 5 minutes, more preferably for more than 10 minutes;
   (B1-4) optionally mixing the product obtained in sub-step (B1-3) with water for dilution, then mixing it under stirring with the aluminum source solution obtained in sub-step (B1-2), preferably stirring it at room temperature for more than 1 minute, more preferably for 30-60 minutes, to obtain a mixture, referred to as the second mixture; wherein said mixture has the following molar formulation ratios: n(SiO₂)/n(Al₂O₃)=20-200, n(MB₂O)/n(SiO₂)=0.10-0.20, n(H₂O)/n(SiO₂)=20-60, wherein MB represents an alkali metal; preferably, MB represents one or more of K, Rb, Cs;
   (B2) under stirring, adding a certain amount of the crystal seed solution obtained in sub-step (A2) to the second mixture obtained in sub-step (B1-4), preferably stirring it at room temperature for more than 10 minutes, e.g., stirring for 1-6 hours, to obtain a mixture, referred to as the third mixture.
   (B3) subjecting the third mixture from sub-step (B2) to hydrothermal dynamic crystallization at a temperature above 100°C, e.g., for more than 1 hour, preferably hydrothermal dynamic crystallization at a temperature of 140-180°C, more preferably 150-170°C, for 6-48 hours, preferably 10-40 hours; filtering the obtained product, optionally washing, drying, and calcining it to obtain the parent zeolite;
   (B4) under stirring, mixing the parent zeolite obtained in sub-step (B3) with an alkali-containing solution, e.g., stirring at a temperature of 60-90°C for, e.g., 20-60 minutes; preferably, the alkali content in said alkali-containing solution is 0.4-1.0 mol/L, to obtain a solid product; and optionally
   (B5) subjecting the solid product obtained in sub-step (B4) to perform exchange treatment to obtain the H-type single-crystal hollow ZSM-5 zeolite; and optionally
   (B6) introducing phosphorus into the H-type single-crystal hollow ZSM-5 zeolite obtained in sub-step (B5).

For the present invention, said room temperature denotes a temperature of 20-35°C.

According to an embodiment of the above preparation method, in sub-step (A1), said first silicon source is selected from one or more of methyl orthosilicate or ethyl orthosilicate, and/or, said template agent is selected from one or more of tetrapropylammonium hydroxide or tetrapropylammonium bromide.

According to an embodiment of the above preparation method, in sub-step (A1), the molar ratio of template agent R/SiO₂ is 0.05-0.50, e.g., 0.1-0.4, and/or, the molar ratio of H₂O/SiO₂ is 10-80, e.g., 30-55.

According to a preferred embodiment of the above preparation method, in sub-step (B1-1), the mass concentration of the alkali source solution is 10-30%, e.g., 15-25 wt%. Preferably, said alkali source is selected from one or more of potassium hydroxide, rubidium hydroxide, or cesium hydroxide.

According to a preferred embodiment of the above preparation method, in sub-step (B1-2), the mass concentration of said aluminum source solution is 5-20%, e.g., 8-12 wt%. Preferably, said aluminum source is selected from one or more of aluminum sulfate, aluminum nitrate, aluminum isopropoxide, sodium aluminate, or aluminum chloride.

According to a preferred embodiment of the above preparation method, in sub-step (B1-3), said second silicon source is silica sol. Preferably, said silica sol is selected from ammonium-type silica sol, sodium-type silica sol, or mixtures thereof. The SiO₂ content in said silica sol is 10-45 wt%, e.g., the SiO₂ mass content in the silica sol is 15%, 25%, 30%, 45%, or ranges formed with any two of these values as endpoints.

According to a preferred embodiment of the above preparation method, said second mixture has the following molar formulation ratios: n(SiO₂)/n(Al₂O₃)=20-200, e.g., 30-100, preferably 40-80, more preferably 45-65; n(MB₂O)/n(SiO₂)=0.10-0.20, preferably 0.12-0.16; n(H₂O)/n(SiO₂)=20-60, preferably 40-60; wherein MB represents an alkali metal; preferably, MB represents one or more of K, Rb, Cs.

According to a preferred embodiment of the above preparation method, in sub-step (B2), the mass ratio of SiO₂ in said crystal seed solution to SiO₂ in the second silicon source in sub-step (B1-3) is 5-20:100 or 6-10:100.

According to a preferred embodiment of the above preparation method, in sub-step (A2), the crystal grain size of the crystal seeds in said crystal seed solution (or referred to as seed solution) is 200-800 nm, preferably 300-700 nm, e.g., 400 nm, 500 nm, or 600 nm.

According to a preferred embodiment of the above preparation method, in sub-step (B3), the third mixture from sub-step (B2) is subjected to hydrothermal dynamic crystallization at a temperature above 100°C, e.g., for more than 1 hour, preferably hydrothermal dynamic crystallization at a temperature of 140-180°C, more preferably 150-170°C, for 6-48 hours, preferably 10-40 hours. For example, the mixture obtained in step (B3) can be transferred to a high-pressure hydrothermal reaction kettle with a polytetrafluoroethylene inner liner, followed by hydrothermal dynamic crystallization. Said dynamic crystallization means performing the crystallization reaction while the mixture is in motion, e.g., under stirring.

According to a preferred embodiment of the above preparation method, in sub-step (B3), the obtained product is filtered to separate the zeolite formed by crystallization from the mother liquor, then washed with water to remove the mother liquor adhering to the zeolite, e.g., using deionized water to performing washing, then dried, and then calcined. Said drying is conducted at a temperature above 40°C, e.g., 50-150°C, for more than 1 minute, preferably 1-10 minutes. Said calcination can be performed at a calcination temperature of 450-600°C, e.g., 500-600°C, for more than 0.5 hour, e.g., for a calcination time of 2-12 hours, e.g., 3-6 hours.

In sub-step (B3), the parent zeolite is obtained, which mainly exists in the form of solid crystals. The central part of these solid crystals is rich in silicon while the peripheral part is rich in aluminum.

According to the preparation method of said single-crystal hollow ZSM-5 zeolite provided by the present invention, in sub-step (B4), said parent zeolite is mixed with an alkali-containing solution under stirring for more than 5 minutes, e.g., stirring at a temperature of 60-90°C for 20-60 minutes, to treat the zeolite crystals to form the hollow structure. Then the obtained solid is recovered by filtration, optionally washed, e.g., with deionized water to remove residual alkali solution from the treated parent zeolite, then dried to obtain the zeolite solid. Said alkali solution is, for example, an alkali solution containing one or more of sodium hydroxide, potassium hydroxide, rubidium hydroxide, cesium hydroxide. The alkali content in said alkali solution, calculated as metal molar amount, is 0.4-2.0 mol/L, e.g., 0.4-1 mol/L.

According to a preferred embodiment of the above preparation method of zeolite, in sub-step (B5), the solid product obtained in sub-step (B4) is treated to obtain the H-type single-crystal hollow ZSM-5 zeolite. According to an embodiment, said treatment includes subjecting the solid product obtained in sub-step (B4) to ion exchange, e.g., ammonium exchange, filtration, optionally washing, then drying, and calcining. The operation methods for ammonium exchange, drying, and calcining are well-known to those skilled in the art. For example, drying can be performed at a temperature above 40°C for more than 1 minute, and calcining can be performed at a temperature above 400°C, preferably 500-600°C, for more than 0.5 hour, preferably for 1-5 hours. According to a preferred embodiment, said ammonium exchange is referred to as the first ammonium exchange, wherein the temperature for the first ammonium exchange can be 50-95°C, the exchange time can be 0.5-2 hours, and the mass ratio of ZSM-5 zeolite, ammonium salt, and water can be 1:(0.1-1):(5-15). Said ammonium salt can be selected from one or more of ammonium chloride, ammonium sulfate, and ammonium nitrate. Said first ammonium exchange can be performed once or multiple times.

According to a preferred embodiment of the above preparation method of zeolite, step (B6) introduces phosphorus into said H-type single-crystal hollow ZSM-5 zeolite to obtain a phosphorus-containing single-crystal hollow ZSM-5 zeolite. The method for introducing phosphorus can be carried out according to existing methods, e.g., phosphorus can be introduced into the H-type single-crystal hollow ZSM-5 zeolite by impregnation, usually comprising the steps of contacting said H-type single-crystal hollow ZSM-5 zeolite with an impregnation solution, drying, and calcining. The impregnation solution can be phosphoric acid solution, ammonium phosphate solution, diammonium hydrogen phosphate solution, ammonium dihydrogen phosphate solution, or mixtures of these solutions.

The methods for drying and calcining can be carried out according to existing methods, e.g., oven drying, air-flow drying, rotary drying; calcination can be performed at a temperature of 450-600°C for 1-6 hours.

The single-crystal hollow ZSM-5 zeolite obtained by the preparation method according to the present invention has inner and outer double-layered cavity structure respectively at least partially enclosed by two zeolite layers, and a regular hexagonal morphology. Its crystal grain surface is regular, smooth, and free of attachments, with an average crystal grain size of 1.0-3.0 µm.

According to a third aspect of the present invention, it also relates to a use of a single-crystal hollow ZSM-5 zeolite according to the first aspect of the present invention or obtained by the method according to the second aspect of the present invention in the petrochemical and/or fine chemical fields.

Through the single-crystal hollow ZSM-5 zeolite preparation method according to the second aspect of the present invention, the single-crystal hollow ZSM-5 zeolite of the present invention can be obtained. Moreover, in the synthesis method for single-crystal hollow ZSM-5 zeolite according to the present invention, there is no need to use large amounts of organic template agents, making the synthesis method environmentally friendly.

According to an embodiment of the aforementioned third aspect, the single-crystal hollow ZSM-5 zeolite according to the present invention can be applied to adsorption separation or catalytic cracking/ deep catalytic cracking of hydrocarbon compounds. When said single-crystal hollow ZSM-5 zeolite is used in the deep catalytic cracking reaction of hydrocarbon compounds, higher gasoline yield and low-carbon olefin (ethylene and propylene) yields can be obtained. Therefore, said single-crystal hollow ZSM-5 zeolite according to the present invention has good industrial application value.

According to an embodiment of the aforementioned third aspect, said single-crystal hollow ZSM-5 zeolite is used for the deep catalytic cracking of hydrocarbon oil, which includes the step of contacting said hydrocarbon oil with said single-crystal hollow ZSM-5 zeolite and performing the deep catalytic cracking reaction. According to a preferred embodiment, said single-crystal hollow ZSM-5 zeolite is the H-type zeolite. According to a preferred embodiment, said single-crystal hollow ZSM-5 zeolite contains phosphorus, referred to as a phosphorus-containing single-crystal hollow ZSM-5 zeolite, wherein the phosphorus content can be, for example, 0.5-10 wt%, e.g., 6 wt%, 7 wt%, 8 wt%, or 9 wt%, calculated relative to the weight of the zeolite.

Since the single-crystal hollow ZSM-5 zeolite according to the present invention has a double-layered cavity structure and a regular hexagonal morphology, its crystal grain surface is regular, smooth, and free of attachments, and it simultaneously has abundant pore structures, including micropore structure, mesopore structure, and macropore structure, therefore the single-crystal hollow ZSM-5 zeolite according to the present invention can provide multi-directional diffusion paths for large-molecule reactants and improve the accessibility of the active centers of zeolite. Since said single-crystal hollow ZSM-5 zeolite has improved accessibility to the active sites of zeolite, it exhibits excellent catalytic performance, particularly selectivity, for the deep cracking of large-molecule hydrocarbon compounds; for example, when used in the deep catalytic cracking reaction of large-molecule hydrocarbon compounds, it can significantly increase gasoline and low-carbon olefin production.

According to a fourth aspect of the present invention, it also relates to a catalyst, particularly a catalyst for deep catalytic cracking, containing the single-crystal hollow ZSM-5 zeolite according to the first aspect of the present invention or obtained by the method according to the second aspect of the present invention.

According to an embodiment of the fourth aspect of the present invention, said catalyst for deep catalytic cracking contains the single-crystal hollow ZSM-5 zeolite according to the aforementioned first aspect, Y-type zeolite, and a carrier. Preferably, in the catalyst, the content of said single-crystal hollow ZSM-5 zeolite is 10-40 wt%, the content of said Y-type zeolite is 10-30 wt%, and the content of said carrier is 30-80 wt%.

Preferably, said single-crystal hollow ZSM-5 zeolite has a double-layer enclosed hollow structure and regular hexagonal morphology, with an average crystal grain size of 1.0-3.0 µm, and the entire particle has a single-crystal structure.

Preferably, said single-crystal hollow ZSM-5 zeolite grows along the ac-axis direction, and the growth orientation of the entire particle is consistent.

Preferably, said single-crystal hollow ZSM-5 zeolite may contain phosphorus or may not contain phosphorus. The phosphorus content of said single-crystal hollow ZSM-5 zeolite, calculated as P₂O₅, is 0-15 wt%, e.g., 0.5-10 wt%. The phosphorus/aluminum molar ratio of said single-crystal hollow ZSM-5 zeolite is 0.5-1.5, preferably 0.8-1.2.

Preferably, said single-crystal hollow ZSM-5 zeolite does not contain phosphorus, or its phosphorus/aluminum molar ratio is less than 1, and it has the following properties: after modification under a phosphorus/aluminum molar ratio of 1, i.e., introducing phosphorus into said single-crystal hollow ZSM-5 zeolite to achieve a phosphorus/aluminum molar ratio of 1 in the zeolite, under conditions of hydrothermal treatment at 800°C for 17 h, the crystallinity retention is greater than or equal to 90%, and/or the acid amount retention is greater than or equal to 30%. Said modification can employ an equal-volume impregnation method to introduce phosphorus into said single-crystal hollow ZSM-5 zeolite according to a phosphorus/aluminum molar ratio of 1. Method is as follows: evenly spreading the zeolite sample in a watch glass or crucible, slowly pouring a phosphorus-containing solution onto the zeolite sample until the zeolite sample ultimately appears "slurry-like", stirring evenly, then drying in an oven; then grinding evenly, and calcining at 550°C for 4 hours. Usually, the mass ratio of the phosphorus-containing solution to the zeolite is 1-3. Said phosphorus-containing solution is, for example, phosphoric acid solution.

Preferably, said single-crystal hollow ZSM-5 zeolite contains phosphorus, its phosphorus/aluminum molar ratio is 0.5-1.5 or above 1.5, e.g. is 1. Under conditions of hydrothermal treatment at 800°C for 17 h, the crystallinity retention of said single-crystal hollow ZSM-5 zeolite is greater than or equal to 90%, and/or the acid amount retention is greater than or equal to 30%.

The atmosphere for said hydrothermal treatment is 100 vol% water vapor atmosphere. Crystallinity retention is the ratio of the relative crystallinity after said hydrothermal treatment of the zeolite obtained after said single-crystal hollow ZSM-5 zeolite is modified under a phosphorus/aluminum molar ratio of 1, or of said single-crystal hollow ZSM-5 zeolite with a phosphorus/aluminum molar ratio of 0.5 or above or 1 or above, to its relative crystallinity before said hydrothermal treatment. Acid amount retention is the ratio of the acid amount after said hydrothermal treatment of the zeolite obtained after said single-crystal hollow ZSM-5 zeolite is modified under a phosphorus/aluminum molar ratio of 1, or of said single-crystal hollow ZSM-5 zeolite with a phosphorus/aluminum molar ratio of 0.5 or above, e.g., of 1 or above, to its acid amount before said hydrothermal treatment.

Preferably, the mesoporous specific surface area of said single-crystal hollow ZSM-5 zeolite accounts for 5-15%, e.g., 8-14%, of the total specific surface area.

Preferably, the mesopore volume of said single-crystal hollow ZSM-5 zeolite accounts for 30-50%, e.g., 30-45% or 32-41%, of the total pore volume.

Preferably, the relative crystallinity of said single-crystal hollow ZSM-5 zeolite is 80-100%.

Preferably, the silicon/aluminum molar ratio of said single-crystal hollow zeolite, calculated as SiO₂/Al₂O₃, is 20-100.

In the present invention, the phosphorus/aluminum molar ratio of said single-crystal hollow ZSM-5 zeolite can be detected by the XRF fluorescence method, and the rare earth component content can be detected by the XRF fluorescence method.

The rare earth content in said Y-type zeolite, calculated as RE₂O₃, is 2-25 wt%, e.g., 2-12 wt% or 8-15 wt%.

Said Y-type zeolite contains rare earth and may contain or may not contain phosphorus. In said Y-type zeolite, the phosphorus content, calculated as P₂O₅, can be 0-10 wt%.

Said rare earth elements are preferably one or two of lanthanum and cerium.

According to the present invention, the silicon-to-aluminum ratio of said Y-type zeolite, calculated as the SiO₂/Al₂O₃ molar ratio, is preferably 4.0-8.0, e.g., is 5-8.

According to the present invention, said Y-type zeolite can be one or more of a Y-type zeolite that has undergone hydrothermal ultrastabilization and/or vapor-phase ultrastabilization, or a rare earth-containing Y-type zeolite. Said Y-type zeolite is preferably an ultrastablized Y-type zeolite. Said ultrastablized Y-type zeolite can be one or more of a Y-type zeolite that has only undergone hydrothermal ultrastabilization, a Y-type zeolite that has only undergone vapor-phase ultrastabilization, or a Y-type zeolite that has undergone both hydrothermal and vapor-phase ultrastabilization treatments.

Said "hydrothermal ultrastabilization" refers to treating Y zeolite in the presence of water vapor to dealuminate the zeolite and increase its silicon-to-aluminum ratio. Said "vapor-phase ultrastabilization" refers to treating Y-type zeolite in the presence of silicon tetrachloride to dealuminate and supplement silicon, to increase the silicon-to-aluminum ratio of zeolite. According to an embodiment, a Y-type zeolite that has undergone both hydrothermal and vapor-phase ultrastabilization is obtained as follows: usually, the Y zeolite is first subjected to a certain degree of hydrothermal ultrastabilization treatment, and then vapor-phase ultrastabilization treatment. Since the vapor-phase ultrastabilization method and hydrothermal ultrastabilization method are well-known to those skilled in the art, they are not repeated here.

Said vapor-phase ultrastabilized zeolite is selected from, for example, one or more of HSY-4, HSY-12, SCY-4, SCY-12. Said hydrothermal ultrastabilized zeolite is selected from, for example, one or more of DASY-2.0, DSCY-2, RSCY-12, SOY-2, RSCY, SOY-8, SOY-12. The rare earth content (calculated as RE₂O₃) of said RSCY zeolite is usually 16 wt%-18 wt%. Said rare earth Y-type zeolite can be selected from one or more of REY, HRY.

Preferably, said carrier is selected from one or more of natural clay, alumina carrier, silica carrier, aluminum phosphate carrier, and silicon- aluminum oxide carrier.

Preferably, said silica carrier is selected from one or more of neutral silica sol, acidic silica sol, or alkaline silica sol. Said alumina carrier is selected from one or more of alumina sol, acidified pseudo-boehmite, hydrated alumina, and active alumina. Said aluminum phosphate carrier is aluminum phosphate gel. Said silicon- aluminum oxide carrier is selected from one or more of solid silica-alumina material, silica-alumina sol, and silica-alumina gel.

Preferably, said carrier includes a silica carrier. Preferably, based on the dry mass of said catalyst, the content of said silica carrier, calculated as SiO₂, is 1-20 wt%.

According to an embodiment, in said catalyst for deep catalytic cracking, based on the dry weight of said catalyst, the content of said single-crystal hollow ZSM-5 zeolite is 10-40 wt%, the content of said Y-type zeolite is 10-30 wt%, and the content of said carrier is 30-70 wt%. According to an embodiment, said catalyst for deep catalytic cracking comprises single-crystal mesoporous ZSM-5 zeolite, Y-type zeolite, pseudo-boehmite, alumina sol, silica sol, and clay. Based on the dry weight of said catalyst for deep catalytic cracking, the content of said single-crystal hollow ZSM-5 zeolite on a dry basis is 10-40 wt%, preferably 20-30 wt%; the content of said Y-type zeolite is 10-30 wt%, preferably 15-25 wt%; the content of pseudo-boehmite, calculated as alumina, is 5-30 wt%, preferably 10-20 wt%; the content of alumina sol, calculated as alumina, is 5-20 wt%, preferably 10-15 wt%; the content of silica sol, calculated as silica, is 2-15 wt%, preferably 5-12 wt%; and the content of clay on a dry basis is 10-50 wt%, preferably 20-40 wt%. Said pseudo-boehmite is preferably acidified pseudo-boehmite, and the acidification method is well-known to those skilled in the art.

According to a fifth aspect of the present invention, it also provides a method for preparing the catalyst according to the aforementioned fourth aspect. The method comprises: spray-drying and calcining a slurry containing the carrier, the single-crystal hollow ZSM-5 zeolite according to the present invention, Y-type zeolite, and water to form catalyst particles.

Said spray-drying is a technique conventionally used by those skilled in the art, capable of drying the material while also shaping the catalyst. Spray-drying is well-known to those skilled in the art, and specific methods are not repeated here.

According to an embodiment of the aforementioned fifth aspect, the preparation method of the catalyst for deep catalytic cracking provided by the present invention further comprises: mixing the catalyst particles obtained from said spray-drying and calcining, an ammonium salt, and a solvent in a weight ratio of 1:(0.1-1):(5-15) to perform ammonium exchange, referred to as the second ammonium exchange, and optionally washing. A condition for said second ammonium exchange includes: a temperature of 50-100°C, time of 0.5-2 hours. Said solution containing ammonium salt is calculated as ammonium salt, said ammonium salt can be selected from one or more of ammonium chloride, ammonium sulfate, and ammonium nitrate. Said solvent is, for example, water. Herein, said second ammonium exchange can be performed once or multiple times.

According to an embodiment of the aforementioned fifth aspect, the formed slurry containing the carrier, the single-crystal hollow ZSM-5 zeolite according to the present invention, Y-type zeolite, and water is spray-dried and calcined. Spray-drying can dry the material while also shaping the catalyst. Spray-drying and calcining can be implemented by spray-drying and calcining methods conventionally used by those skilled in the art. According to a preferred embodiment, the calcination temperature can be, for example, 450-600°C, and the calcination time can be, for example, 1-5 hours.

According to an embodiment of the aforementioned fifth aspect, in said method for preparing the catalyst for deep catalytic cracking, the catalyst particles obtained from spray-drying can also undergo ammonium exchange to reduce the sodium oxide content in the catalyst. Said ammonium exchange can be performed before or after calcination.

According to an embodiment of the aforementioned fifth aspect, based on the dry weight of the catalyst for deep catalytic cracking, the sodium oxide content in said catalyst for deep catalytic cracking is preferably 0.15 wt% or less.

According to a sixth aspect of the present invention, it also relates to a use of the catalyst for deep catalytic cracking according to the aforementioned fourth aspect in the deep catalytic cracking of heavy oil to produce low-carbon olefins (ethylene, propylene, etc.) and gasoline.

According to a seventh aspect of the present invention, it also provides a deep catalytic cracking process, which comprises contacting hydrocarbon oil with the single-crystal hollow ZSM-5 zeolite according to the aforementioned first aspect of the present invention or the catalyst according to the aforementioned fourth aspect of the present invention and preforming reaction.

According to an embodiment of said seventh aspect, said deep catalytic cracking process is conducted in a fluidized bed reactor. Preferably, the reaction temperature for said deep catalytic cracking is 550-650°C, preferably 580-620°C; the catalyst-to-oil ratio by weight is 5-30, preferably 8-20; the weight hourly space velocity (WHSV) is, for example, 5-30 h⁻¹, e.g., 8-20 h⁻¹.

According to an embodiment of said seventh aspect, said single-crystal hollow ZSM-5 zeolite is an H-type and/or phosphorus-containing single-crystal hollow ZSM-5 zeolite, wherein the phosphorus content, calculated as P₂O₅, can be 0.5-10 wt%.

The following examples further illustrate the present invention, but the present invention is not limited thereby.

The raw materials used in the following examples and comparative examples, unless otherwise specified, are all obtained commercially.

The acid amount determination of the zeolite uses the Autochem II 2920 temperature-programmed desorption instrument from Micromeritics, USA.

Low-temperature nitrogen adsorption analysis, instrument: ASAP2420 Physical Adsorption Analyzer (from Micromeritics Instrument Corporation, USA). Experimental method is: sample pretreatment is performed in first step: weighing a certain amount of sample and charging it into a sample tube that has been measured for blank, placing it in the degassing treatment unit, and degassing it for 6 hours under conditions of furnace temperature of 300°C and vacuum degree less than 1.33 Pa; sample measurement is performed in second step: placing the pretreated sample together with tube into the measurement unit, filling the Dewar flask with liquid nitrogen, inputting the analysis file to start the measurement; the measurement process involves using the static volumetric method to determine the adsorption isotherm, the pore size distribution is calculated by using the BJH method, and the specific surface area is calculated by using the BET formula.

Fourier transform diffraction pattern, electron microscope model being JEM-ARM200F, is directly imaged using electron diffraction mode of an electron microscope.

The room temperature in the following examples and comparative examples is 26°C.

### Example 1

Preparation of crystal seed solution:
(A1) 60.0 g of ethyl orthosilicate, 34.0 g of tetrapropylammonium hydroxide, and 140.5 g of deionized water were mixed uniformly and stirred with heating at 40°C for 4 hours;
(A2) the solution from sub-step (A1) was transferred to a high-pressure hydrothermal reaction kettle with a polytetrafluoroethylene inner liner and subjected to dynamic crystallization at 170°C for 12 hours;
(A3) after crystallization ended, the crystallization product was taken out from the reaction kettle, denoted as crystal seed solution 1.

Preparation of single-crystal hollow ZSM-5 zeolite:
(B1-1) 2.65 g of potassium hydroxide was added to 7.95 g of deionized water and stirred evenly to obtain an alkali source solution;
(B1-2) 2.10 g of aluminum sulfate octadecahydrate was added to 18.9 g of deionized water and stirred evenly to obtain an aluminum source solution;
(B1-3) 29.70 g of silica sol (SiO₂ content 30%, pH 9.2, sodium-type silica sol, sodium oxide content 0.22 wt%, same below) was slowly added to the alkali source solution from sub-step (B1-1) and stirred at room temperature for 30 minutes to obtain a first mixture;
(B1-4) 85.45 g of deionized water was added to the product obtained in sub-step (B1-3), then the aluminum source solution from sub-step (B1-2) was added under stirring, and the mixture was stirred at room temperature for 30 minutes to obtain a second mixture.
(B2) 6.24 g of crystal seed solution 1 obtained in sub-step (A3) was added to the mixture from sub-step (B1-4) and stirred at room temperature for 4 hours to obtain a third mixture.
(B3) the third mixture from sub-step (B2) was transferred to a high-pressure hydrothermal reaction kettle with a polytetrafluoroethylene inner liner and subjected to hydrothermal dynamic crystallization at 170°C for 48 hours; the obtained product was filtered, washed, dried, and calcined (calcination temperature 550°C, calcination time 2 hours, same below) to obtain zeolite N-1;
(B4) zeolite N-1 and a 0.6 mol/L sodium hydroxide solution were mixed uniformly in a mass ratio of zeolite N-1 to sodium hydroxide solution of 1:10; the temperature was raised to 80°C at a rate of 4°C/min, then stirred at that temperature for 30 minutes, filtered, washed, and dried to obtain zeolite N-1-J;
(B5) zeolite N-1-J, ammonium chloride, and deionized water were mixed uniformly in a mass ratio of zeolite N-1-J : ammonium chloride : deionized water = 1:1:10, heated under stirring in an 80°C water bath for 30 minutes, filtered, washed, and dried. Then the dried solid, ammonium chloride, and deionized water were mixed uniformly in a mass ratio of 1:0.5:10 to conduct the second ammonium exchange, filtered, washed and dried, and then calcined at 550°C for 2 hours to obtain the H-type single-crystal hollow ZSM-5 zeolite, denoted as N-1-J-H. Figure 1 is a transmission electron microscopy image of this zeolite, showing regular hexagonal morphology. Figure 2 is its Fourier transform diffraction pattern. According to Figure 2, it can be seen that said single-crystal hollow ZSM-5 zeolite has a single-crystal structure.

### Example 2

Preparation of crystal seed solution:
(A1) 54.0 g of ethyl orthosilicate, 48.0 g of tetrapropylammonium hydroxide, and 180.7 g of deionized water were mixed uniformly and stirred with heating at 40°C for 4 hours;
(A2) the solution from step (A1) was transferred to a high-pressure hydrothermal reaction kettle with a polytetrafluoroethylene inner liner and subjected to dynamic crystallization at 170°C for 12 hours.
(A3) after crystallization ended, it was taken out, denoted as crystal seed solution 2.

Preparation of single-crystal hollow ZSM-5 zeolite:
(B1-1) 2.56 g of potassium hydroxide was added to 11.66 g of deionized water and stirred evenly to obtain an alkali source solution.
(B1-2) 1.35 g of aluminum isopropoxide was added to 15.53 g of deionized water and stirred evenly to obtain an aluminum source solution.
(B1-3) 30.60 g of silica sol (SiO₂ content 30%) was slowly added to the alkali source solution from step (B1-1) and stirred at room temperature for 30 minutes to obtain a first mixture;
(B1-4) 115.81 g of deionized water was added to the first mixture obtained in step (B1-3), then the aluminum source solution from step (B2) was added under stirring, and the mixture was stirred at room temperature for 30 minutes to obtain a second mixture;
(B2) 9.18 g of crystal seed solution 2 from step (A3) was added to the second mixture from step (B1-4) and stirred at room temperature for 4 hours to obtain a third mixture;
(B3) the third mixture from step (B2) was transferred to a high-pressure hydrothermal reaction kettle with a polytetrafluoroethylene inner liner and subjected to hydrothermal dynamic crystallization at 170°C for 48 hours; the obtained product was filtered, washed, dried, and calcined to obtain zeolite N-2;
(B4) zeolite N-2 and a 1.0 mol/L sodium hydroxide solution were mixed uniformly in a mass ratio of zeolite N-2 to sodium hydroxide solution of 1:10; the temperature was raised to 80°C at a rate of 4°C/min, then stirred at that temperature for 30 minutes, filtered, washed, and dried to obtain zeolite N-2-J;
(B5) zeolite N-2-J, ammonium chloride, and deionized water were mixed uniformly in a mass ratio of zeolite N-2-J : ammonium chloride : deionized water = 1:1:10, heated under stirring in an 80°C water bath for 30 minutes, filtered, washed, and dried. Then the dried solid, ammonium chloride, and deionized water were mixed uniformly in a mass ratio of 1:0.5:10 to conduct the second ammonium exchange, filtered, washed, dried, and calcined at 550°C for 2 hours to obtain the H-type single-crystal hollow ZSM-5 zeolite with regular hexagonal morphology, denoted as N-2-J-H.

### Example 3

Preparation of crystal seed solution:
(A1) 45.4 g of ethyl orthosilicate, 65.3 g of tetrapropylammonium hydroxide, and 150.2 g of deionized water were mixed uniformly and stirred with heating at 40°C for 4 hours;
(A2) the solution from step (A1) was transferred to a high-pressure hydrothermal reaction kettle with a polytetrafluoroethylene inner liner and subjected to dynamic crystallization at 170°C for 12 hours;
(A3) after crystallization ended, it was taken out, denoted as crystal seed solution 3.

Preparation of single-crystal hollow ZSM-5 zeolite:
(B1-1) 6.80 g of rubidium hydroxide was added to 27.2 g of deionized water and stirred evenly to obtain an alkali source solution;
(B1-2) 1.08 g of sodium aluminate was added to 9.72 g of deionized water and stirred evenly to obtain an aluminum source solution;
(B1-3) 62.3 g of silica sol (SiO₂ content 30%) was slowly added to the alkali source solution from step (B1-1) and stirred at room temperature for 30 minutes to obtain a first mixture;
(B1-4) 163.58 g of deionized water was added to the product obtained in step (B1-3), then the aluminum source solution from step (B1-2) was added under stirring, and the mixture was stirred at room temperature for 30 minutes to obtain a second mixture;
(B2) 22.43 g of crystal seed solution 3 from step (A3) was added to the second mixture from step (B1-4) and stirred at room temperature for 4 hours to obtain a third mixture;
(B3) the third mixture from step (B2) was transferred to a high-pressure hydrothermal reaction kettle with a polytetrafluoroethylene inner liner and subjected to hydrothermal dynamic crystallization at 170°C for 48 hours; the obtained product was filtered, washed, dried, and calcined to obtain zeolite N-3;
(B4) zeolite N-3 and a 0.6 mol/L sodium hydroxide solution were mixed uniformly in a mass ratio of zeolite N-3 to sodium hydroxide solution of 1:10; the temperature was raised to 80°C at a rate of 4°C/min, then stirred at that temperature for 30 minutes, filtered, washed, and dried to obtain zeolite N-3-J;
(B5) zeolite N-3-J, ammonium chloride, and deionized water were mixed uniformly in a mass ratio of zeolite N-3-J : ammonium chloride : deionized water = 1:1:10, heated under stirring in an 80°C water bath for 30 minutes, filtered, washed, and dried. Then the dried solid, ammonium chloride, and deionized water were mixed uniformly in a mass ratio of 1:0.5:10 to conduct the second ammonium exchange, filtered, washed, oven-dried, and calcined at 550°C for 2 hours to obtain the H-type single-crystal hollow ZSM-5 zeolite with regular hexagonal morphology, denoted as N-3-J-H.

### Comparative Example 1

Conventional ZSM-5 zeolite, having silicon-to-aluminum molar ratio (SiO₂/Al₂O₃) of 25, was purchased from Sinopec Catalyst Company Qilu Branch, denoted as DB1-H.

### Comparative Example 2

(1) conventional ZSM-5 zeolite and a 0.2 mol/L sodium hydroxide solution were mixed uniformly in a mass ratio of ZSM-5 zeolite to alkali solution of 1:10, heated under stirring at 80°C for 30 minutes, filtered, washed, and dried;
(2) the alkali-treated conventional ZSM-5 zeolite, ammonium chloride, and deionized water were mixed uniformly in a mass ratio of 1:1:10, heated under stirring in an 80°C water bath for 30 minutes, filtered, washed, and oven-dried. Then the dried solid, ammonium chloride, and deionized water were mixed uniformly in a mass ratio of 1:0.5:10 to conduct the second ammonium exchange, filtered, washed, oven-dried, and then calcined at 550°C for 2 hours to obtain the H-type zeolite DB2-H, which is not a hollow zeolite.

### Comparative Example 3

Conventional ZSM-5 zeolite was purchased from Sinopec Catalyst Company Qilu Branch, having silicon-to-aluminum molar ratio (SiO₂/Al₂O₃) of 25.
(1) Conventional ZSM-5 zeolite and a 1.0 mol/L sodium hydroxide solution were mixed uniformly in a mass ratio of ZSM-5 zeolite to alkali solution of 1:10, heated under stirring at 80°C for 30 minutes, filtered, washed, and dried;
(2) the alkali-treated purchased ZSM-5 zeolite, ammonium chloride, and deionized water were mixed uniformly in a mass ratio of 1:1:10, heated under stirring in an 80°C water bath for 30 minutes, filtered, washed, and oven-dried. Then the dried solid, ammonium chloride, and deionized water were mixed uniformly in a mass ratio of 1:0.5:10 to conduct the second ammonium exchange, filtered, washed, oven-dried, and calcined at 550°C for 2 hours to obtain the H-type zeolite DB3-H, which is not a hollow zeolite.

### Comparative Example 4

The zeolite of this comparative example was prepared according to the method of Example 1, except in that in sub-step (B1-2), 3.20 g of aluminum sulfate octadecahydrate was added to 10.9 g of deionized water and stirred evenly to obtain the aluminum source solution; and in sub-step (B1-3), 18.80 g of silica sol (SiO₂ content 30%, pH 9.2, sodium-type silica sol, sodium oxide content 0.22 wt%, same below) was slowly added to the alkali source solution from sub-step (B1-1) and stirred at room temperature for 30 minutes to obtain the first mixture. Other preparation steps were the same. The H-type single-crystal hollow ZSM-5 zeolite with regular hexagonal morphology was obtained, denoted as DB4-H.

**Table 1**

| Sample | N-1-J -H | N-2-J -H | N-3-J -H | DB1-H | DB4 -H |
|---|---|---|---|---|---|
| Crystal Seed solution formulation ratio | | | | | |
| R/SiO₂ | 0.15 | 0.24 | 0.38 | | 0.15 |
| H₂O/SiO₂ | 33.24 | 48.22 | 52.71 | | 33.24 |
| Zeolite synthesis ratio | | | | | |
| SiO₂/Al₂O₃ | 47.517 | 47.173 | 61.181 | | 19.739 |
| K₂O/SiO₂ | 0.153 | 0.143 | 0.125 | | 0.242 |
| H₂O/SiO₂ | 50.198 | 59.74 | 43.561 | | 70.372 |
| Alkali source solution concentration, wt% | 25 | 18 | 20 | | 25 |
| Aluminum source solution concentration, wt% | 10 | 8 | 10 | | 10 |
| Ratio of SiO₂ content in the crystal seed solution to the total SiO₂ content in the silicon source from steps (B1-3), wt% | 7 | 10 | 12 | | 11 |
| Alkali treatment: alkali solution concentration, mol/L | 0.6 | 1.0 | 0.6 | | 0.6 |
| Crystal Seed size, nm | 480 | 450 | 240 | | 480 |
| Crystal grain length Dₜ, µm | 2.8 | 2.0 | 1.8 | | 2.7 |
| Length of outer-layered cavity, Dⱼ, µm | 1.6 | 1.5 | 1.4 | | 1.3 |
| Dₜ/Dⱼ | 1.75 | 1.33 | 1.29 | | 2.1 |
| Width of crystal grain, µm | 2.0 | 1.1 | 0.9 | | 2.0 |
| Width of the outer-layered cavity, in µm | 1.4 | 0.9 | 0.8 | | 1.2 |
| Width of crystal grain / Width of the outer-layered cavity | 1.43 | 1.22 | 1.13 | | 1.67 |
| Thickness of the second wall layer of zeolite, nm | 300 | 100 | 50 | | 400 |
| Thickness of the first wall layer of zeolite, nm | 130 | 70 | 30 | | 130 |
| Length of the inner-layered cavity, nm | 500 | 450 | 250 | | 500 |
| Width of the inner-layered cavity, nm | 450 | 400 | 200 | | 450 |
| Appearance | Regular hexagon | Regular hexagon | Regular hexagon | hexagon | Regular hexagon |
| After hydrothermal treatment at 800°C for 17 hours, the crystal retention rate, % | 91.2 | 92.0 | 91.7 | 82.6 | 91.0 |
| After hydrothermal treatment at 800°C for 17 hours, acid retention rate, % | 32.5 | 33.1 | 31.7 | 27.3 | 32.1 |
| Ratio of mesoporous specific surface area to the total specific surface area, % | 11.2 | 13.5 | 8.9 | 9.7 | 7.9 |
| Ratio of mesopore volume to the total pore volume, % | 38.9 | 40.2 | 32.4 | 30.4 | 29.9 |
| Silicon-to-aluminum ratio of product (SiO₂/Al₂O₃ molar ratio) | 27.8 | 25.9 | 30.7 | 24.9 | 14.6 |
| The relative crystallinity of the product, % | 92.4 | 90.7 | 87.6 | 78.1 | 82.4 |
| Crystal and cavity structure | Single crystal, Double-layered cavity | Single crystal, Double-layered cavity | Single crystal, Double-layered cavity | Non-single crystal, without cavities | Single crystal, Double-layered cavity |

In Table 1, the zeolite synthesis formulation ratio is the formulation ratio of the product from step (B1-4). Crystal seed size is the average size of the crystal seeds; crystal grain size is the average crystal grain size of the final product.

### Zeolite Evaluation

The zeolites from examples and comparative examples, after modification under a phosphorus/aluminum molar ratio of 1:1 and calcination (method was as follows: the zeolite sample was evenly spread in a watch glass or crucible, a phosphorus-containing solution was slowly poured onto the zeolite sample until the zeolite sample ultimately appeared "slurry-like", stirred evenly, then dried in an oven; then ground evenly, and calcined at 550°C for 4 hours), were aged and deactivated under 800°C, 100% water vapor for 17 hours, pressed into pellets and sieved to 40-60 mesh particles, and evaluated on a fixed-bed microreactor FB. The model compound was n-hexadecane. Evaluation conditions were: reaction temperature 620°C, catalyst-to-oil ratio (by weight) 0.75. Results are listed in Table 2.

**Table 2**

| Sample | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|
| Material balance, % | | | | | | | |
| Dry air | 21.08 | 19.99 | 23.59 | 19.35 | 19.97 | 19.42 | 20.33 |
| Liquefied gas | 49.47 | 50.88 | 49.01 | 45.13 | 45.21 | 46.73 | 46.14 |
| Gasoline | 11.23 | 10.75 | 11.05 | 8.57 | 11.35 | 10.30 | 12.13 |
| Diesel fuel | 17.97 | 18.14 | 16.08 | 26.60 | 23.07 | 23.26 | 21.12 |
| Coke | 0.25 | 0.25 | 0.27 | 0.35 | 0.40 | 0.30 | 0.28 |
| Total | 100.00 | 100.00 | 100.00 | 100.00 | 100.00 | 100.00 | 100.00 |
| Diene yield, % | 40.59 | 39.46 | 39.52 | 35.57 | 36.37 | 36.85 | 37.51 |
| propylene/ethylene | 2.88 | 3.03 | 2.91 | 2.38 | 2.38 | 2.50 | 2.58 |

From Table 2, it can be seen that compared with the comparative examples, the single-crystal hollow ZSM-5 zeolite provided by the present invention has higher diolefin (ethylene and propylene) yield and a higher propylene/ethylene ratio. Additionally, the zeolite provided by the present invention has excellent mechanical strength. After the above catalytic performance test experiments, no damage to the zeolite particles was found.

Examples 4-6 and Comparative Examples 5-6 illustrate the preparation of catalysts for deep catalytic cracking.

### Examples 4-6

Examples 4, 5, and 6 used the single-crystal hollow ZSM-5 zeolites prepared according to the methods of Examples 1, 2, and 3 above, respectively, to prepare the catalyst for deep catalytic cracking according to the present invention. The catalyst numbers were sequentially: A1, A2, A3. Among them, the single-crystal hollow ZSM-5 zeolites prepared according to Examples 1-3 were phosphorus-modified using an equal-volume impregnation method with a phosphorus compound at a phosphorus/aluminum molar ratio of 1:1, then oven-dried, calcined, and then used. The phosphorus compound used was diammonium hydrogen phosphate. N-1-J-H after phosphorus modification was denoted as N-1-J-HP, N-2-J-H after phosphorus modification was denoted as N-2-J-HP, and N-3-J-H after phosphorus modification was denoted as N-3-J-HP.

The preparation method of the catalyst for deep catalytic cracking comprised: (1) pseudo-boehmite (abbreviated as bauxite) and water were mixed uniformly; concentrated hydrochloric acid at a concentration of 36 wt% was added under stirring, with an acid/aluminum weight ratio of 0.2 (weight ratio of 36 wt% hydrochloric acid to pseudo-boehmite calculated as Al₂O₃); the resulting mixture was aged at 70°C for 1.5 hours to obtain aged pseudo-boehmite slurry; the alumina content of this aged pseudo-boehmite slurry was 12 wt%; (2) The above-prepared single-crystal hollow ZSM-5 zeolite, Y-type zeolite, alumina sol, silica sol, kaolin clay, and the above aged pseudo-boehmite slurry as well as deionized water were mixed uniformly to form a slurry with a solid content of 30 wt%, which was spray-dried to obtain catalyst microspheres; (3) the catalyst microspheres were calcined at 550°C for 4 h; (4) the calcined catalyst microspheres were exchanged at 80°C for 1 hour in a weight ratio of catalyst microspheres : ammonium salt : H₂O = 1:1:10, and was filtered. The above exchange and filtration process was repeated once, then dried. The ammonium salt used was ammonium chloride. The obtained catalyst for deep catalytic cracking had a sodium oxide content lower than 0.15 wt%.

### Comparative Example 5

Comparative Example 5 illustrates the preparation of a catalyst for deep catalytic cracking using the zeolite DB1-H provided in Comparative Example 1. According to the preparation method of catalyst of Example 4, zeolite DB1-H was phosphorus-modified (denoted as DB1-HP), then mixed with Y-type zeolite, pseudo-boehmite, silica sol, kaolin clay, water, and alumina sol, spray-dried, calcined, and ammonium-exchanged to prepare microsphere catalyst DB2.

### Comparative Example 6

A catalyst was prepared according to the method of Example 4, with the difference that in the catalyst, the Y-type zeolite content was 35 wt%, and the ZSM-5 zeolite content was 10 wt%. The composition of the prepared catalysts is shown in Table 3.

**Table 3. Composition of Catalyst**

| No. | Catalyst No. | ZSM-5 Zeolite No. | Catalyst composition, wt% | | | | | |
|---|---|---|---|---|---|---|---|---|
| | | | ZSM-5 zeolite | RSCY-12 | Kaolin | Bauxite | Alumina Sol | Silica sol |
| Ex. 4 | A1 | N-1-J-HP | 28 | 17 | 20 | 15 | 15 | 5 |
| Ex. 5 | A2 | N-2-J-HP | 28 | 17 | 20 | 15 | 15 | 5 |
| Ex. 6 | A3 | N-3-J-HP | 28 | 17 | 20 | 15 | 15 | 5 |
| Comp. Ex. 5 | DB2 | DB1-HP | 28 | 17 | 20 | 15 | 15 | 5 |
| Comp. Ex. 6 | DB3 | N-1-J-HP | 10 | 35 | 20 | 15 | 15 | 5 |

### Catalyst Performance Testing

The Catalysts for deep catalytic cracking prepared in the examples and comparative examples were aged under 800°C, 100 vol% water vapor for 17 hours, then their deep catalytic cracking reaction performance was evaluated on a small fixed fluidized bed reaction kettle. Evaluation conditions were reaction temperature 540°C and 570°C, catalyst-to-oil ratio 8.0 (by weight), weight hourly space velocity 10 h⁻¹. The heavy oil properties are shown in Table 4. Reaction results are shown in Tables 5 and 6.

**Table 4. Properties of Heavy Oil**

| Properties of feedstock oil | |
|---|---|
| Density at 20 °C, g/ cm³ | 0.914 |
| Density at 80 °C, mm²/s | 19.77 |
| Density at 100 °C, mm²/s | 11.29 |
| Carbon residue value, % | 2.83 |

| Distillation range, °C | |
|---|---|
| 10% | 333 |
| 30% | 402 |
| 50% | 452 |
| 70% | 513 |
| 90% | 631 |

| Elemental mass composition, % | |
|---|---|
| C | 87.16 |
| H | 12.56 |
| S | 0.164 |
| N | 0.150 |

**Table 5. Catalytic Performance Evaluation Results 1**

| Catalyst | A1 | A2 | A3 | DB 2 | DB 3 |
|---|---|---|---|---|---|
| Reaction conditions | | | | | |
| Reaction temperature/°C | 540 | 540 | 540 | 540 | 540 |
| Agent-to-oil ratio | 8 | 8 | 8 | 8 | 8 |

| Product mass distribution, % | | | | | |
|---|---|---|---|---|---|
| Dry air | 2.16 | 2.14 | 2.18 | 2.79 | 1.97 |
| Liquefied gas | 24.45 | 24.28 | 24.36 | 21.03 | 12.41 |
| Gasoline | 37.43 | 37.31 | 37.37 | 28.21 | 41.87 |
| Diesel fuel | 16.98 | 17.03 | 16.94 | 20.67 | 19.17 |
| Heavy oil | 14.39 | 14.67 | 14.55 | 21.32 | 16.11 |
| Coke | 4.59 | 4.57 | 4.60 | 5.98 | 8.47 |
| Ethylene, wt % | 1.16 | 1.15 | 1.14 | 1.03 | 0.87 |
| Propylene, wt % | 11.57 | 11.43 | 11.44 | 9.47 | 4.27 |

**Table 6. Catalytic performance evaluation results 2**

| Catalyst | A1 | A2 | A3 | DB 2 | DB 3 |
|---|---|---|---|---|---|
| Reaction conditions | | | | | |
| Reaction temperature/°C | 570 | 570 | 570 | 570 | 570 |
| Agent-to-oil ratio | 8 | 8 | 8 | 8 | 8 |

| Product mass distribution, % | | | | | |
|---|---|---|---|---|---|
| Dry air | 6.33 | 6.30 | 6.39 | 4.33 | 5.17 |
| Liquefied gas | 35.88 | 35.67 | 35.74 | 31.01 | 22.77 |
| Gasoline | 33.82 | 33.76 | 33.76 | 30.24 | 38.51 |
| Diesel fuel | 11.76 | 12.00 | 11.91 | 15.89 | 12.34 |
| Heavy oil | 7.09 | 7.25 | 7.15 | 12.21 | 8.64 |
| Coke | 5.12 | 5.02 | 5.05 | 6.32 | 12.57 |
| Ethylene, wt % | 3.46 | 3.33 | 3.40 | 2.30 | 2.04 |
| Propylene, wt % | 16.78 | 16.73 | 16.69 | 14.29 | 9.32 |

From Tables 5 and 6, it can be seen that the catalyst for deep catalytic cracking provided by the present invention has higher heavy oil conversion ability, higher gasoline and low-carbon olefin (ethylene and propylene) yields, both under low reaction severity and high reaction severity conditions. Additionally, it can also have lower coke yield and higher liquefied gas yield. Furthermore, the catalyst for deep catalytic cracking provided by the present invention has excellent mechanical strength. After the above catalyst performance test experiments, no damage to the catalyst particles was found.

## Claims

1. A single-crystal hollow ZSM-5 zeolite, wherein particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite, and wherein a ratio of a length of crystal grain of the zeolite to a length of the outer-layered cavity is 1.1-2.0, and a ratio of a width of crystal grain of the zeolite to a width of the outer-layered cavity is 1.05-1.5, wherein the length and width of crystal grain of the zeolite are obtained by randomly measuring the size of a maximum dimension and a dimension perpendicular to that maximum dimension in a projection plane of 10 crystal grains in SEM or TEM images of a zeolite sample, respectively, and then calculating their average values, and the length and width of the outer-layered cavity are obtained by randomly measuring the size of a maximum dimension and a dimension perpendicular to that maximum dimension of a bright white portion in the projection plane of 10 crystal grains in SEM or TEM images of a zeolite sample, respectively, and then calculating their average values.

2. The single-crystal hollow ZSM-5 zeolite according to claim 1, **characterized in that** particles of single-crystal hollow ZSM-5 zeolite have a regular hexagonal morphology, said ZSM-5 zeolite grows along an ac-axis direction, a growth orientation of an entire particle is consistent, and it has an average crystal grain size of 1.0-3.0 µm.

3. The single-crystal hollow ZSM-5 zeolite according to claim 1 or 2, **characterized in that** said single-crystal hollow ZSM-5 zeolite contains phosphorus or does not contain phosphorus, and/or, a silicon-to-aluminum ratio of said single-crystal hollow ZSM-5 zeolite, calculated as SiO₂/Al₂O₃, is 20-100; preferably, a phosphorus/aluminum molar ratio in said single-crystal hollow ZSM-5 zeolite is 0.5-1.5, or, after said single-crystal hollow ZSM-5 zeolite is modified under a phosphorus/aluminum molar ratio of 1, its crystallinity retention is greater than or equal to 90%, and its acid amount retention is greater than or equal to 30% after hydrothermal treatment at 800°C for 17 hours.

4. The single-crystal hollow ZSM-5 zeolite according to any one of claims 1-3, **characterized in that** a mesoporous specific surface area of said single-crystal hollow ZSM-5 zeolite accounts for 5-15%, preferably 8-14%, of a total specific surface area, and/or, a mesopore volume accounts for 30-50%, preferably 30-45%, of a total pore volume.

5. The single-crystal hollow ZSM-5 zeolite according to claim 1, **characterized in that** a length of the crystal grain of said single-crystal hollow ZSM-5 zeolite is 1.0-3.0 µm, a width of the crystal grain is 0.5-2.5 µm, a length of the inner-layered cavity is 100-800 nm, a ratio of the length of the inner-layered cavity to a width of the inner-layered cavity is 1.01-1.2, and a thickness of the first wall layer of zeolite is less than 300 nm.

6. A method for preparing a single-crystal hollow ZSM-5 zeolite, wherein particles of single-crystal hollow ZSM-5 zeolite have a single-crystal structure, exhibit hexagonal morphology, and have a double-layered cavity structure nested inside and out, wherein an inner-layered cavity is at least partially enclosed by a first wall layer of zeolite, and an outer-layered cavity is completely enclosed by a second wall layer of zeolite, and wherein a ratio of a length of crystal grain of the zeolite to a length of the outer-layered cavity is 1.1-2.0, and a ratio of a width of crystal grain of the zeolite to a width of the outer-layered cavity is 1.05-1.5, **characterized in that** said method comprises:
step A of preparing a crystal seed solution, which includes the following sub-steps:
(A1) mixing a first silicon source, a template agent, and water to obtain a first mixture;
(A2) subjecting the first mixture obtained in sub-step (A1) to hydrothermal dynamic crystallization to obtain a crystal seed solution;
step B of preparing the single-crystal hollow ZSM-5 zeolite, which includes the following sub-steps:
(B1) under stirring, sequentially adding an alkali source solution, a second silicon source dispersion, and an aluminum source dispersion into water to obtain a second mixture;
(B2) under stirring, adding a certain amount of the aforementioned crystal seed solution into the second mixture to obtain a third mixture;
(B3) subjecting the third mixture to hydrothermal dynamic crystallization; filtering an obtained product, optionally washing, drying, and calcining it to obtain a parent zeolite;
(B4) mixing the obtained parent zeolite with an alkali-containing solution to perform treatment to obtain a solid product; and optionally
(B5) treating the obtained solid product to obtain an H-type single-crystal hollow ZSM-5 zeolite; and optionally
(B6) introducing phosphorus into the H-type single-crystal hollow ZSM-5 zeolite obtained in sub-step (B5).

7. The method according to any one of claims 5-6, **characterized in that** the method comprises:
A. preparing crystal seed zeolite, including the following sub-steps:
(A1) under stirring, dissolving a first silicon source and a template agent in water, stirring at 30-60°C for more than 1 hour, preferably 2-6 hours, to obtain a first mixture, preferably a molar ratio of template agent R/SiO₂ is 0.05-0.50, and a molar ratio of H₂O/SiO₂ is 10-80;
(A2) subjecting the first mixture from sub-step (A1) to hydrothermal dynamic crystallization at a temperature of 140-180°C for more than 1 hour, e.g., 8-24 hours, preferably 10-18 hours, for example, transferring the mixture to a high-pressure hydrothermal reaction kettle with a polytetrafluoroethylene inner liner and performing hydrothermal crystallization under stirring to obtain a solution containing a crystallization product, denoted as the crystal seed solution, preferably, a crystal grain size of crystal seeds in said crystal seed solution is 200-800 nm;
B. preparing the single-crystal hollow ZSM-5 zeolite, including the following sub-steps:
(B1-1) dissolving an alkali source in water and stirring evenly to obtain an alkali source solution;
(B1-2) dissolving an aluminum source in water and stirring evenly to obtain an aluminum source solution;
(B1-3) under stirring, mixing a second silicon source with the alkali source solution obtained in sub-step (B1-1), preferably stirring it at room temperature for more than 5 minutes, more preferably stirring it for more than 10 minutes;
(B1-4) optionally mixing the product obtained in sub-step (B1-3) with water to perform dilution, then mixing it under stirring with the aluminum source solution obtained in sub-step (B1-2), preferably stirring it at room temperature for more than 1 minute, more preferably stirring for 30-60 minutes, to obtain a mixture, referred to as the second mixture, wherein said mixture has the following molar formulation ratios: n(SiO₂)/n(Al₂O₃)=20-200, n(MB₂O)/n(SiO₂)=0.10-0.20, n(H₂O)/n(SiO₂)=20-60, wherein MB represents an alkali metal; preferably, MB is one or more of K, Rb, Cs;
(B2) under stirring, adding a certain amount of the crystal seed solution obtained in sub-step (A2) to the second mixture obtained in sub-step (B1-4), preferably stirring it at room temperature for more than 10 minutes, e.g., stirring for 1-6 hours, to obtain a mixture, referred to as the third mixture;
(B3) subjecting the third mixture from sub-step (B2) to hydrothermal dynamic crystallization at a temperature above 100°C, e.g., for more than 1 hour, preferably hydrothermal dynamic crystallization at a temperature of 140-180°C, preferably 150-170°C, for 6-48 hours, preferably 10-40 hours; filtering an obtained product, optionally washing, drying, and calcining it to obtain the parent zeolite;
(B4) under stirring, mixing the parent zeolite obtained in sub-step (B3) with an alkali-containing solution, e.g., stirring it at a temperature of 60-90°C for, e.g., 20-60 minutes, wherein, preferably, an alkali content in said alkali-containing solution is 0.4-1.0 mol/L, to obtain a solid product; and optionally
(B5) subjecting the solid product obtained in sub-step (B4) to exchange treatment to obtain the H-type single-crystal hollow ZSM-5 zeolite; and optionally
(B6) introducing phosphorus into the H-type single-crystal hollow ZSM-5 zeolite obtained in sub-step (B5).

8. The method according to claim 7, **characterized in that** in sub-step (A1), said first silicon source is one or more of methyl orthosilicate or ethyl orthosilicate, and/or, said template agent is one or more of tetrapropylammonium hydroxide or tetrapropylammonium bromide, preferably, in sub-step (A1), a molar ratio of template agent R/SiO₂ is 0.1-0.4, and/or, a molar ratio of H₂O/SiO₂ is 30-55; and/or, in sub-step (B1-1), a mass concentration of the alkali source solution is 10-30%, and said alkali source is selected from one or more of potassium hydroxide, rubidium hydroxide, or cesium hydroxide; and/or, in sub-step (B2), a mass concentration of said aluminum source solution is 5-20%, and said aluminum source is selected from one or more of aluminum sulfate, aluminum nitrate, aluminum isopropoxide, sodium aluminate, or aluminum chloride, and/or, in sub-step (B1-3), said second silicon source is silica sol, preferably, said silica sol is selected from ammonium-type silica sol, sodium-type silica sol, or mixtures thereof; a SiO₂ content in said silica sol is 10-45 wt%.

9. The method according to any one of claims 7-8, **characterized in that** said second mixture has the following molar formulation ratios: n(SiO₂)/n(Al₂O₃)=45-65, n(K₂O)/n(SiO₂)=0.12-0.16, n(H₂O)/n(SiO₂)=40-60; and/or, in sub-step (B2), a mass ratio of SiO₂ in said crystal seed solution to SiO₂ in the second silicon source in sub-step (B1-3) is 5-20:100 or 5-10:100.

10. Use of the single-crystal hollow ZSM-5 zeolite according to any one of claims 1-5 or obtained by the method according to any one of claims 6-9 for catalyzing a deep catalytic cracking reaction of hydrocarbons.

11. A catalyst, **characterized in that** the catalyst contains the single-crystal hollow ZSM-5 zeolite according to any one of claims 1-5 or obtained by the method according to any one of claims 6-9.

12. The catalyst according to claim 11, **characterized in that** the catalyst is a catalyst for deep catalytic cracking, which further comprises a Y-type zeolite and a carrier, preferably, based on a dry weight of said catalyst, said catalyst for deep catalytic cracking contains 10-40 wt% of the single-crystal hollow ZSM-5 zeolite, 10-30 wt% of the Y-type zeolite, and 30-80 wt% of the carrier.

13. The catalyst according to claim 12, **characterized in that** a silicon-to-aluminum ratio of said Y-type zeolite, calculated as SiO₂/Al₂O₃ molar ratio, is 4-8; preferably, said Y-type zeolite is selected from an ultrastablized Y-type zeolite and/or a rare earth-containing Y-type zeolite, wherein said ultrastablized Y-type zeolite is a Y-type zeolite that has undergone hydrothermal ultrastabilization and/or a Y-type zeolite that has undergone vapor-phase ultrastabilization, preferably, a rare earth content of said Y-type zeolite, calculated as RE₂O₃ oxide, is 2-25 wt%, preferably 2-12 wt%, preferably, said rare earth element can be preferably one or two of lanthanum and cerium.

14. The catalyst according to any one of claims 12-13, wherein said carrier is selected from one or more of natural clay, alumina carrier, silica carrier, aluminum phosphate carrier, and siliconaluminum oxide carrier; preferably, said silica carrier is selected from one or more of neutral silica sol, acidic silica sol, or alkaline silica sol; said alumina carrier is preferably selected from one or more of alumina sol, acidified pseudo-boehmite, hydrated alumina, and active alumina; said aluminum phosphate carrier is selected from aluminum phosphate gel; said siliconaluminum oxide carrier is selected from one or more of solid silica-alumina material, silica-alumina sol, and silica-alumina gel.

15. The catalyst according to any one of claims 12-14, **characterized in that**, based on a dry weight of said catalyst, said catalyst contains: on a dry basis, 10-40 wt% of said single-crystal hollow ZSM-5 zeolite; on a dry basis, 10-30 wt% of said Y-type zeolite; calculated as alumina, 5-30 wt% of pseudo-boehmite; calculated as alumina, 5-20 wt% of alumina sol; calculated as silica, 2-15 wt% of silica sol; and on a dry basis, 10-50 wt% of clay; preferably, said pseudo-boehmite is acidified pseudo-boehmite.

16. A method for preparing the catalyst according to any one of claims 11-15, the method comprising: spray-drying a slurry containing a carrier, the single-crystal hollow ZSM-5 zeolite, the Y-type zeolite, and water.

17. The method according to claim 16, wherein the method further comprises: mixing catalyst particles obtained from said spray-drying, an ammonium salt, and a solvent in a weight ratio of 1:(0.1-1):(5-15) to perform ammonium exchange, and optionally washing; preferably, conditions for said ammonium exchange include: temperature of 50-100°C, time of 0.5-2 hours; preferably, said ammonium salt is selected from one or more of ammonium chloride, ammonium sulfate, and ammonium nitrate, preferably, said solvent is selected from water.

18. Use of the catalyst according to any one of claims 11-15 for a deep catalytic cracking reaction of heavy oil to increase gasoline and low-carbon olefin production.

19. A deep catalytic cracking process of hydrocarbon oil, comprising contacting hydrocarbon oil with the single-crystal hollow ZSM-5 zeolite according to any one of claims 1-4 or the catalyst according to any one of claims 11-16 to perform reaction.
